**Europäisches Patentamt**

**European Patent Office**

**Office européen des brevets**

(19)

(11) Veröffentlichungsnummer: **0 143 169**
**B1**

(12) # EUROPÄISCHE PATENTSCHRIFT

(45) Veröffentlichungstag der Patentschrift:
**06.04.88**

(51) Int. Cl.⁴: **G 01 G 7/02**, G 01 G 23/01

(21) Anmeldenummer: **84108534.3**

(22) Anmeldetag: **19.07.84**

(54) **Waage mit elektromagnetischer Lastkompensation.**

(30) Priorität: **29.09.83 CH 5275/83**

(43) Veröffentlichungstag der Anmeldung:
**05.06.85 Patentblatt 85/23**

(45) Bekanntmachung des Hinweises auf die Patenterteilung:
**06.04.88 Patentblatt 88/14**

(84) Benannte Vertragsstaaten:
**DE FR GB IT NL**

(56) Entgegenhaltungen:
**CH-A-634 653
DE-A-2 803 682
DE-A-3 200 872
GB-A-2 088 061
US-A-3 786 678
US-A-4 245 711**

**Physikalisch Technische Bundesanstalt, Bericht PTB-Me-37, Braunschweig (DE) 1982 P. Brandos und M. Kochsiek "Maßnahmen zur Funktionsfehlererkennung (FFE) an einer elektromechanischen Waage"
Control Engineering, May 1965, Barrington III.(US), ab Seite 65 G.H. Loos "Make the Most of Time-Proportional Control"**

**Die Akte enthält technische Angaben, die nach dem Eingang der Anmeldung eingereicht wurden**

(73) Patentinhaber: **Mettler Instrumente AG, Im Langacher, CH- 8606 Greifensee (CH)**

(72) Erfinder: **Baumann, Arthur, Hertistr. 11, CH- 8614 Bertschikon (CH)**

(56) Entgegenhaltungen: (Fortsetzung)
**und die nicht in dieser Patentschrift enthalten sind.**

## Beschreibung

Die Erfindung betrifft eine Waage mit elektromagnetischer Lastkompensation nach dem Oberbegriff des Anspruchs 1 (siehe US-A-4 245 711).

Waagen dieser Gattung gibt es in verschiedenen Ausgestaltungen; als Beispiele seien genannt Waagen mit Impulskompensation, d.h. solche, bei denen der Kompensationsspulenanordnung Stromimpulse lastabhängiger Dauer zugeführt werden, oder nach dem Ladungsausgleichsprinzip (Charge Balancing) arbeitende Waagen.

Insbesondere bei eichfähigen Waagen müssen gewisse Bedingungen der Funktionsfehlererkennung (FFE) erfüllt werden. Hierzu gehört auch die Überwachung der Konstantstromquelle bzw. der entsprechenden Referenzelemente (Referenzspannungsquelle, Referenzwiderstand). Hierzu war es bisher üblich, der Waage eine zweite Referenzspannungsquelle bzw. Referenzstromquelle zuzuordnen. Zu Kontrollzwecken wurde dann zu gegebener Zeit von der Arbeits-Referenz auf die Prüf-Referenz umgeschaltet, wobei die jeweiligen Messergebnisse (innerhalb gewisser Toleranzen) übereinstimmen mussten.

Ein gravierender Nachteil dieser Methode liegt darin, dass die Arbeits- und die Prüf-Referenz auf genau gleiche Spannung (bzw. den gleichen Strom) abgeglichen werden müssen. Der dafür erforderliche Aufwand ist beträchtlich; er muss während der Lebensdauer der Waage darüber hinaus wiederholt werden, wenn die Langzeitstabilität beider Referenzen nicht das genau gleiche Verhalten zeigt. Hinzu kommt, dass die bisher übliche manuelle Umschaltung von Arbeits- auf Prüf-Referenz das Risiko in sich birgt, dass eine Änderung der Arbeitsreferenz längere Zeit unbemerkt bleibt.

Die Erfindung entstand aus der Aufgabe, eine Dauerüberwachung der Referenz zu ermöglichen und den erwähnten genauen Abgleich der beiden Referenzen entbehrlich zu machen.

Diese Aufgabe wird durch eine Wange nach dem Anspruch 1 gelöst.

Vorteilhafte Ausgestaltung sind den abhängigen Ansprüchen zu entnehmen.

Ausführungsbeispiele der Erfindung werden im folgenden anhand der blockschematischen Zeichnungen erläutert. In den Zeichnungen ist

Figur 1 ein Schaltbild eines ersten Ausführungsbeispiels,

Figur 2 eine Darstellung der Signalverläufe, und

Figur 3 eine Schaltbild eines zweiten Ausführungsbeispiels.

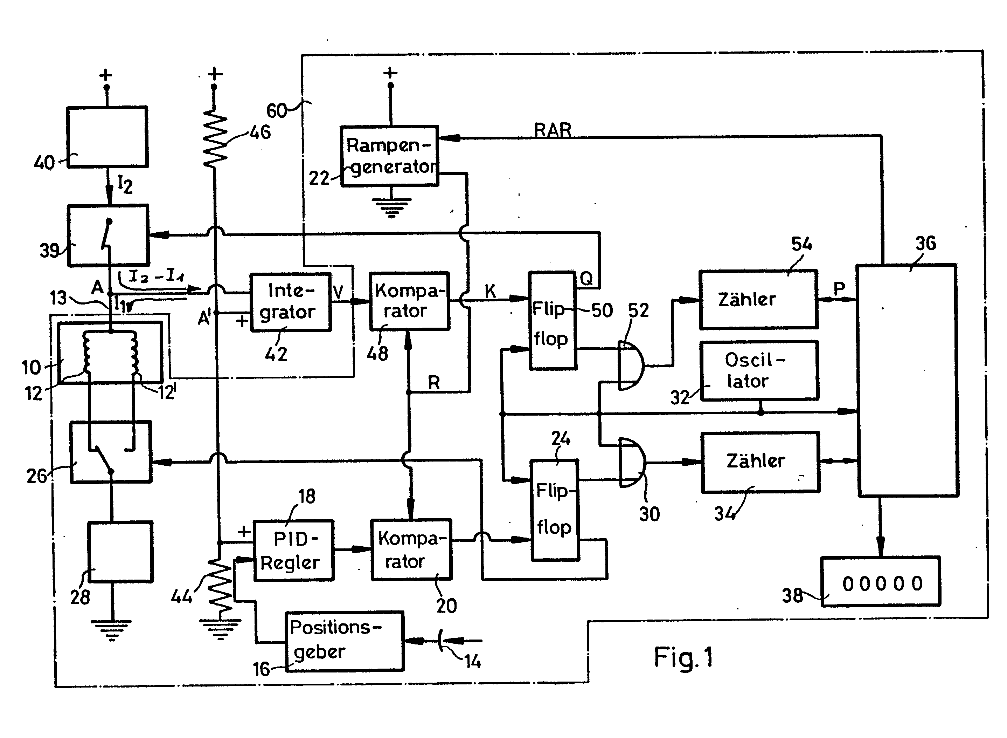

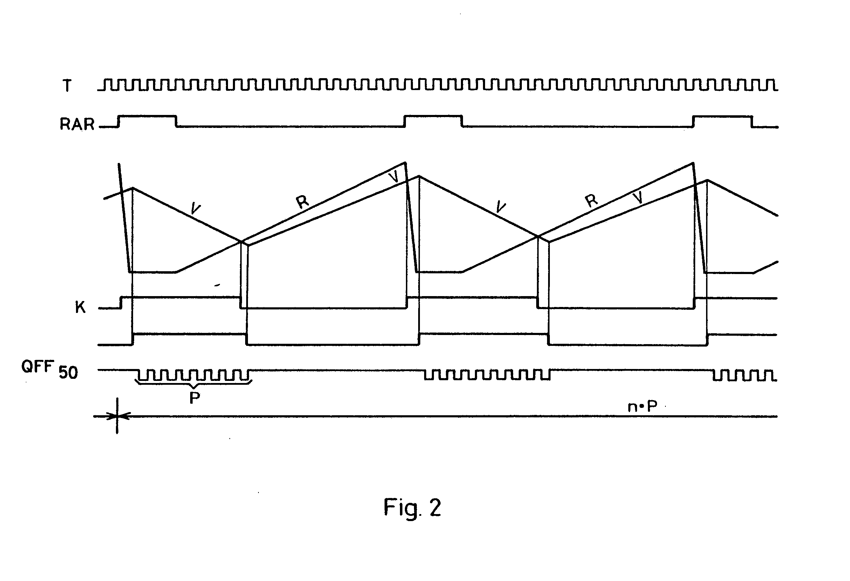

## Beispiel I (Figuren 1 und 2)

Das Beispiel geht aus von einer Waage mit Impulskompensation, wie sie z. B. in der US-Patentschrift 4 245 711 ausführlich beschrieben ist. Ihre Arbeitsweise wird hier summarisch rekapituliert. Von der im übrigen konventionell aufgebauten Waage ist in Figur 1 nur die Kompensationsspulenanordnung 10 gezeigt, umfassend die Windungspakete 12 und 12'' mit einer Anzapfung 13. Das Signal eines Lagesensors 14 des Lastaufnehmers wird über eine Positionsgeberschaltung 16 einem PID-Regler 18 zugeführt. Das dort gebildete Regelsignal wird in einem Komparator 20 mit einer periodischen Sägezahnspannung R (Rampe), erzeugt in einem Rampengenerator 22, verglichen. Der Schnittpunkt der Regelspannung mit der Rampenspannung ist lastabhängig. Das Ausgangssignal des Komparators 20 steuert über einen Synchronisier-Flipflop 24 einen Schalter 26, der eine Konstantstromquelle 28 alternierend mit den Enden der Windungspakete 12 bzw. 12' verbindet. Der Flipflop 24 steuert ferner ein ODER-Tor 30, das von einem Taktgeber (Oszillator) 32 beaufschlagt wird. Während lastproportionaler Zeitabschnitte innerhalb vorgegebener Perioden ist einerseits die Konstantstromquelle 28 an das Windungspaket 12 geschaltet und laufen andererseits Taktimpulse T durch das Tor 30 in einen Zähler 34. Ein Mikrocomputer 36 bereitet die Zählresultate auf und steuert eine Digitalanzeige 38.

Der bisher erläuterte Teil der Schaltung entspricht der bekannten Schaltung aus der genannten US-Patentschrift. Der zur Prüfung der Konstantstromquelle 28 ergänzte Teil der Schaltung wird nachstehend beschrieben.

Der Konstantstrom $I_1$ wird nicht direkt vom Pluspol der Speisung bezogen, sondern von einem virtuellen Pluspol A, dem über einen Schalter 38 eine zusätzliche Konstantstromquelle 40 vorgeschaltet ist. Diese liefert einen Strom $I_2$, der grösser ist als $I_1$. Ein Integrator 42 sorgt dafür, dass am Punkt A das gleiche Potential herrscht wie am Punkt A'. Dieses Potential wird bestimmt durch einen Spannungsteiler mit den Widerständen 44 und 46. In einem Komparator 48 wird die Ausgangsspannung V des Integrators 42 mit der vom Generator 22 bezogenen Rampe verglichen.

Ist der Schalter 39 geschlossen, so fliesst in den Integrator 42 die Differenz der Ströme $I_2 - I_1$, und V wird kleiner. Sobald die Rampenspannung R die Spannung V überschreitet, kippt der Ausgang des Komparators 48 (Signal K) auf "low". Hierauf öffnet der Ausgang Q eines Flipflop 50 synchron zum Takt T den Schalter 38. Nun wird der Strom $I_1$ vom Integrator 42 bezogen, und dessen Ausgangsspannung V steigt wieder an. Sinkt beim Rücksetzen des Rampengenerators 22 aufgrund des Signals RAR (ramp reset) die Rampenspannung unter die Spannung V, so wechselt das Ausgangssignal K des Komparators 48 auf "high", und über den Flipflop 50 wird der Schalter 39 wieder geschlossen - der Zyklus beginnt von vorn.

Während der Schliesszeiten des Schalters 39 gelangen Taktimpulse über ein ODER-Tor 52 an einen Zähler 54. Die Impulsmengen P werden während einer Mehrzahl von Zyklen (Perioden des Rampengenerators 22) summiert und das Ergebnis vom Mikrocomputer 36 übernommen. Dieser vergleicht das Ergebnis mit einem (beispielsweise in einem EAROM) fest abgespeicherten Referenzwert. Bewegt sich die Differenz beider Werte innerhalb eines vorgegebenen Toleranzbereichs, so liegt auch die Abweichung des Verhältnisses der Referenzströme $I_1$ und $I_2$ innerhalb der zulässigen Grenzen. Andernfalls veranlasst der Mikrocomputer 36 eine Fehlermeldung (z. B. mag in der Anzeige 38 "error" erscheinen, gegebenenfalls mit einer auf die Fehlerquelle hinweisenden Codeziffer).

In Figur 2 sind die Signalverläufe dargestellt. T ist der Impulszug des Taktgebers 32; RAR ist das Rücksetz- und Startsignal für den Rampengenerator 22; K ist der Verlauf des Ausgangssignals vom Komparator 48; und Q $FF_2$ ist das synchronisierte Steuersignal für den Schalter 39. P sind die je Periode (Rampe) gezählten Taktimpulse, und n.P deutet die Summierung über n Zyklen an. Die beiden Kurven V und R geben den Signalverlauf der Ausgangsspannung V des Integrators 42 bzw. der Sägezahnspannung R des Rampengenerators 22 wieder.

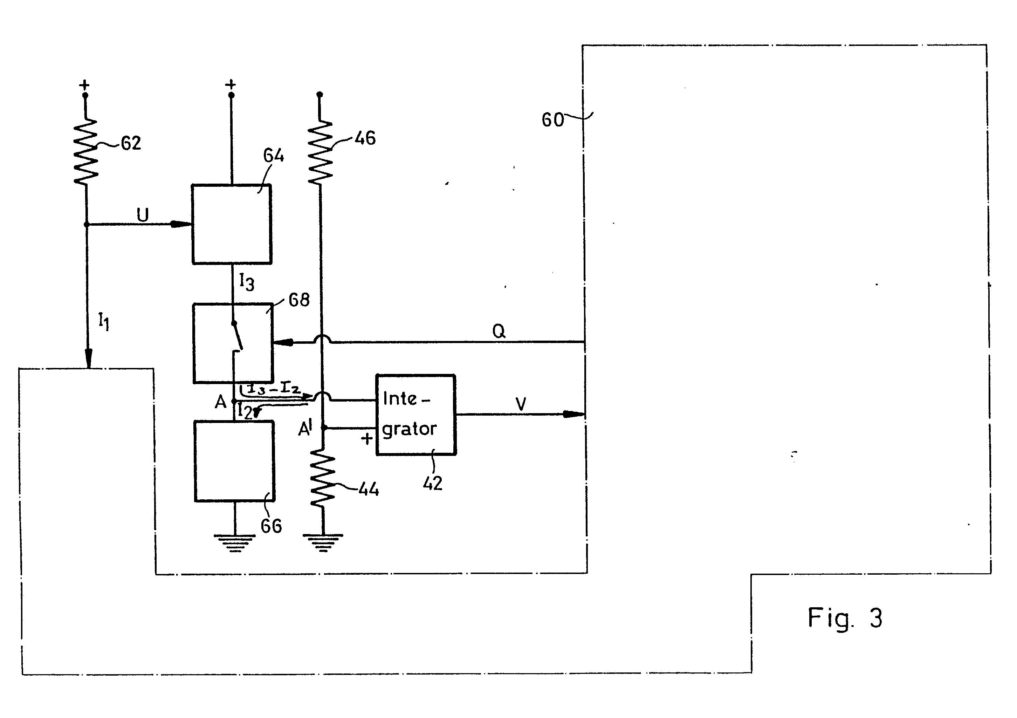

## Beispiel II (Figur 3)

Die Schaltung entspricht weitgehend derjenigen zu Beispiel I. Der besseren Übersichtlichkeit halber wurden die meisten übereinstimmenden Teile zu einem strichpunktierten Bereich 60 zusammengefasst, der in Figur 3 leer gelassen wurde.

Ein vom Kompensations-Konstantstrom $I_1$ durchflossener Widerstand 62 bewirkt einen Spannungsabfall U. Dieser ist bestimmend für eine Konstantstromquelle (Hilfsstromquelle) 64, sodass deren Strom $I_3$ proportional zu $I_1$ ist. Eine weitere Konstantstromquelle 66 ist in Reihe zur Quelle 64 angeordnet; ihr Strom $I_1$ ist kleiner als $I_3$. Ein Schalter 68 verbindet die Quelle 64 alternierend mit der Quelle 66 bzw. dem Integrator 42. Wie im Beispiel I sorgt dieser dafür, dass die beiden Punkte A und A' gleiches Potential haben (letzteres wiederum festgelegt durch den Spannungsteiler 44, 46).

Die weitere Verknüpfung ist analog zu derjenigen des Beispiels I: Bei geschlossenem schalter 68 fliesst die Differenz der Ströme $I_3 - I_2$ zum Integrator 42. Dessen Ausgangssignal V wird im Komparator 48 mit der Sägezahnspannung (22) verglichen, und bei Koinzidenz wird Schalter 68 geöffnet, woraufhin der Integrator 42 den Strom $I_2$ liefert.

Der Vorteil der Variante gemäss Beispiel II liegt darin, dass eine verglichen mit dem Beispiel I um mehrere Volt niedrigere Speisespannung genügt, da die Kompensations-Konstantstromquelle und die Prüf-Konstantstromquelle 66 nunmehr einen gleichen Bezugspunkt (hier: Erde) aufweisen. Der Mehraufwand für die Hilfsstromquelle 64 ist relativ bescheiden.

Die erfindungsgemässe, aus dem Ladungsausgleichsprinzip abgeleitete Überwachungsvorrichtung ist nicht auf impulskompensierende Waagen gemäss den Beispielen beschränkt. Sie ist prinzipiell immer dann anwendbar, wenn es eine Konstantstromquelle zu überwachen gilt.

Zur Digitalisierung sind auch andere Verfahren anwendbar, so z. B. die bekannte Dual-Slope-Methode.

Ferner ist zu bemerken, dass die Kompensationsspulenanordnung mit Anzapfung nur ein Beispiel ist. Andere Anordnungen eignen sich gleichermassen im Rahmen des vorliegenden Konzeptes, beispielsweise solche mit nur einer Spule und einer Ersatzlast (Dummy) zur Aufnahme des Konstantstroms während der Pausenzeiten (vgl. z. B. die Waage gemäss der US-Patentschrift 3 786 678).

## Patentansprüche

1. Waage mit elektromagnetischer Lastkompensation, umfassend eine Konstantstromquelle (28) zur Speisung einer in einem Permanentmagnetsystem beweglich angeordneten Kompensationsspulenanordnung (12, 12') mit einem Strom ($I_1$), gekennzeichnet durch eine Anordung zur selbsttätigen Überwachung der Konstantstromquelle (28), umfassend
   - eine Schaltung (40, 66) zur Erzeugung eines weiteren Stromes ($I_2$),
   - eine weitere Schaltung zur Digitalisering einer zum Strom ($I_1$) vorbestimmten Beziehung unter Verwendung des weiteren Stromes ($I_2$), sowie
   - eine Vergleichsschaltung, welche den digitalisierten Wert mit einem digitalen Referenzwert vergleicht und eine Fehlermeldung auslöst, wenn das Ergebnis des Vergleichs einen vorgegebenen Bereich überschreitet.

2. Waage nach Anspruch 1, dadurch gekennzeichnet, dass die Schaltungen eine weitere Konstantstromquelle (40; 66) umfassen, ferner einen Integrator (42) und einen diesem nachgeschalteten Komparator (48), dessen Ausgang einen über ein Tor (52) von Taktimpulsen beaufschlagten Zähler (54) steuert.

3. Waage nach Anspruch 2, dadurch gekennzeichnet, dass die weitere Konstantstromquelle (40) in Reihe mit der Konstantstromquelle (28) geschaltet ist und über einen Schalter (39) alternierend an die Kompensationsspulenanordnung (10) geschaltet und von dieser getrennt wird, so dass der Integrator (42) abwechselnd den Differenzstrom ($I_2-I_1$) aus den beiden Konstantstromquellen (28, 40) bezieht oder den Strom ($I_1$) liefert.

4. Waage nach Anspruch 2, dadurch gekennzeichnet, dass die weitere Konstantstromquelle (66) einen gleichen Bezugspunkt wie die Konstantstromquelle (28) hat und dass in Reihe zur Konstantstromquelle (66) eine Stromquelle (64) vergesehen ist, die einen Proportionalstrom ($I_3$) proportional zum Stromaus der Konstantstromquelle (28) liefert und über einen Schalter (68) alternierend an die weitere Konstantstromquelle (66) geschaltet und von dieser getrennt wird, so, dass er Integrator (42) abwechselnd den Differenzstrom von ($I_3$-$I_2$) Stromquelle (64) und weitere Konstantstromquelle (66) bezieht oder den weiteren Konstantstrom ($I_2$) liefert.

## Claims

1. A balance with electromagnetic load compensation including a constant current source (28) for supplying a compensation coil arrangement (12, 12') which is arranged movably in a permanent magnet system, with a current ($I_1$), characterised by an arrangement for automatically monitoring the constant current source (28), including
   - a circuit (40; 66) for producing a further current ($I_2$),
   - a further circuit for digitisation of a predetermined relationship to the current ($I_1$), using the further current ($I_2$), and
   - a comparison circuit for comparing the digitised value to a digital reference value and triggering defect signalling if the result of the comparison operation exceeds a predetermined range.

2. A balance according to claim 1 characterised in that the circuits include a further constant current source (40; 66), also an integrator (42) and a comparator (48) which is connected on the output side thereof and whose output controls a counter (54) which is supplied with clock pulses by way of a gate (52).

3. A balance according to claim 2 characterised in that the further constant current source (40) is connected in series with the constant current source (28) and is alternately connected to and separated from the compensation coil arrangement (10) by way of a switch (39) so that the integrator (42) alternately takes the differential current ($I_2$-$I_1$) from the two constant current sources (28, 40) or supplies the current ($I_1$).

4. A balance according to claim 2 characterised in that the further constant ourrent source (66) has the same reference point as the constant current source (28) and that provided in series with the further constant current source (66) is a current source (64) which supplies a proportional ourrent ($I_3$) proportionally to the current ($I_1$) from the constant current source (28) and is alternately connected to and separated from the further constant current source (68) by way of a switch (68) so that the integrator (42) altermately takes

the differential current ($I_3$-$I_2$) from the current source (64) and the further ourrent source (68) or supplies the further constant current ($I_2$).

## Revendications

1. Balance à compensation électromagnétique de charge comportant une source de courant constant (28) destinée à alimenter en un courant ($I_1$) un dispositif à bobine de compensation (12, 12') disposé de manière mobile dans un système à aimant permanent, caractérisée par un dispositif de contrôle automatique de la source de courant constant (28), comportant
   - un circuit (40; 66) destiné à produire un autre courant ($I_2$),
   - un autre circuit destiné à numériser une relation prédéfinie avec le courant ($I_1$) en utilisant l'autre courant ($I_2$), et
   - un circuit de comparaison qui compare la valeur numérisée à une valeur numérique de référence et qui déclenche un signal d'erreur lorsque le résultat de la comparaison excède une limite donnée.

2. Balance selon la revendication 1, caractérisée en ce que les circuits comportent une autre source de courant constant (40; 66), un intégrateur (42) et un comparateur (48) monté en aval de celui-ci dont la sortie commande un compteur (54) recevant des impulsions d'horloge par une porte (52).

3. Balance selon la revendication 2, caractérisée en ce que l'autre source de courant constant (40) est montée en série avec la source de courant constant (28) et est alternativement reliée au dispositif à bobine de compensation (10) et coupée de celui-ci par un interrupteur (39), de sorte que l'intégrateur (42) reçoit le courant différentiel ($I_2$-$I_1$) provenant des deux sources de courant constant (28, 40) ou alternativement fournit le courant ($I_1$).

4. Balance selon la revendication 2, caractérisée en ce que l'autre source de courant constant (66) a un même point de référence que la source de courant constant (28) et en ce qu'il est prévu, en série, avec l'autre source de courant constant (66), une source de courant (64) qui fournit un courant ($I_3$) proportionnel au courant ($I_1$) provenant de la source de courant constant (28) et qui est alternativement reliée à l'autre source de courant constant (66) et coupée de celle-ci par un interrupteur (68), de sorte que l'intégrateur (42) reçoit alternativement le courant différentiel ($I_3$-$I_2$) de la source (64) et de l'autre source de courant constant (66), ou fournit l'autre courant constant ($I_2$).

Fig. 1

Fig. 2

Fig. 3